# EUROPEAN PATENT SPECIFICATION

(11) **EP 3 979 127 B1**
(45) Date of publication and mention of the grant of the patent: **28.10.2026**
(21) Application number: 21209652.3
(22) Date of filing: 07.09.2018
(51) Int. Cl.: G06V 10/25

(54) **PATHOLOGY PREDICTIONS ON UNSTAINED TISSUE**
PATHOLOGIEVORHERSAGEN AN UNGEFÄRBTEM GEWEBE
PRÉDICTIONS DE PATHOLOGIE SUR UN TISSU NON COLORÉ

(30) Priority: 15.02.2018 US 201862631259 P
(43) Date of publication of application: 06.04.2022
(62) Document number(s) of the earlier application(s) in accordance with Art. 76 EPC: 18783176.3 / 3 752 952
(73) Proprietor: Verily Health Inc., Dallas, Texas 75019 (US)
(72) Inventor: STUMPE, Martin, Mountain View, 94043 (US); PENG, Lily, Mountain View, 94043 (US)
(74) Representative: Mewburn Ellis LLP

(56) References cited:
- WO-A1-2015/049233
- JP-A- 2016 541 039
- US-A1- 2009 190 820
- US-A1- 2011 038 523
- US-A1- 2017 372 471
- PINKY A BAUTISTA ET AL: "Digital Staining of Unstained Pathological Tissue Samples through Spectral Transmittance Classification", OPTICAL REVIEW, SPRINGER, BERLIN, DE, vol. 12, no. 1, 1 January 2005 (2005-01-01), pages 7 - 14, XP019353245, ISSN: 1349-9432, DOI: 10.1007/S10043-005-0007-0
- KHOUJ YASSER ET AL: "Hyperspectral Imaging and K-Means Classification for Histologic Evaluation of Ductal Carcinoma In Situ", FRONTIERS IN ONCOLOGY, vol. 8, 7 February 2018 (2018-02-07), XP055890834, DOI: 10.3389/fonc.2018.00017
- TAKEYA MASARU ET AL: "Estimation of transmittance spectra from multiband micrographs of fungi and its application to segmentation of conidia and hyphae", APPLIED OPTICS, vol. 38, no. 16, 1 June 1999 (1999-06-01), US, pages 3644, XP093141553, ISSN: 0003-6935, DOI: 10.1364/AO.38.003644
- NESLIHAN BAYRAMOGLU ET AL: "Towards Virtual H&E Staining of Hyperspectral Lung Histology Images Using Conditional Generative Adversarial Networks", 2017 IEEE INTERNATIONAL CONFERENCE ON COMPUTER VISION WORKSHOPS (ICCVW), 22 October 2017 (2017-10-22), Venice, IT, pages 64 - 71, XP055497287, ISBN: 978-1-5386-1034-3, DOI: 10.1109/ICCVW.2017.15

## Description

### Cross-Reference to Related Applications

This application claims priority to United States Provisional Patent Application No. 62/631,259, filed February 15, 2018.

### Background

This disclosure relates to the field of digital pathology and more particularly to a method for generating a mask in a digital image of a tissue specimen. The term "mask" in this document refers to a closed polygon region or otherwise specified area in an image of the tissue specimen enclosing or otherwise indicating a region of interest, such as cancer cells (for example, cells of a tumor).

Digital images of tissue samples with a mask, and possibly an associated label for the sample, such as "cancerous", are used in several contexts, including as training examples for constructing machine learning models. Such machine learning models can be developed for various purposes, including aiding in diagnosis, clinical decision support and for making predictions for the patient providing the tissue sample, such as predicting survival, or response to treatment.

Machine learning models for making predictions from images of slides containing tissue specimens require accurate "ground truth" masks and optionally assignment of a label to the specimens. As noted above, the masks may be in the form of polygons that are outlining regions of interest, such as regions that contain tumor cells. One example of a method for creating a mask is described in the pending U.S. patent application of C. Gammage, serial no. 15/621837 filed June 13, 2017.

Neural network pattern recognizers for recognizing cancerous cells in digital magnified images of tissue specimens are disclosed in PCT application serial no. PCT/US2017/019051 filed February 23, 2017, and in the scientific and technical literature cited therein. The Inception-v3 deep convolutional neural network architecture, upon which a pattern recognizer as described herein may be based, is described in the scientific literature. See the following references: C. Szegedy et al., Going Deeper with Convolutions, arXiv:1409.4842 [cs.CV] (September 2014); C. Szegedy et al., Rethinking the Inception Architecture for Computer Vision, arXiv:1512.00567 [cs.CV] (December 2015); see also US patent application of C. Szegedy et al., "Processing Images Using Deep Neural Networks", serial no. 14/839,452 filed August 28, 2015. A fourth generation, known as Inception-v4 is considered as another possible architecture for such pattern recognizers. See C. Szegedy et al., Inception-v4, Inception-ResNet and the Impact of Residual Connections on Learning, arXiv:1602.0761 [cs.CV] (February 2016). See also US patent application of C. Vanhoucke, "Image Classification Neural Networks", serial no. 15/395,530 filed December 30, 2016. Note that alternative network architectures, including Resnet and MobileNet, or some other form of pattern recognizer could be applied to perform image processing and/or segmentation tasks.

In pathology today, cancer staging and diagnosis from tissue samples is commonly done on H&E (hematoxylin and eosin) stained tissue specimens. Additionally, machine learning models are typically trained from images of H&E stained tissue specimens. The H&E stain is an unspecific stain which highlights the overall morphology of the tissue. In contrast, there are special stains (including among others immunohistochemical stains, IHCs, Verhoeff's stain, Masson's trichrome stain) that highlight specific antigens, such as tumor markers. Pathologists can usually render a diagnosis and outline the tumor on H&E images, but sometimes require special stains such as IHC stained images for difficult cases. It is also believed that the use of an IHC stained (or other special stained) slide speeds up the human examination and annotation process. However, as a general matter, a tissue slide can either have an H&E stain or an IHC stain, but usually not both at the same time. A common solution therefore is to cut serial sections of tissue and subject them both to staining, microscopy and capture of digital images, where section N is stained with H&E, and section N+1 is stained with an IHC stain, so that the IHC stained tissue is morphologically similar enough (about 5 microns away, which is ~5% of a human cell diameter) to be used alongside the H&E stained tissue image. However, the morphological differences in serial sections are still significant and can lead to inaccuracies in ground truth labels and masks generated in this fashion. Another factor that further increases morphological differences for serial sections is that the two sections are handled separately during processing, and the two tissues might get stretched slightly differently during the processing (e.g. when putting the freshly cut glass section on the glass carrier).

Pinky A. BAUTISTA ET AL discloses a linear mapping between unstained and stained spectral transmittance data sets of specific tissue components by employing the pseudo inverse method to implement the proposed digital staining framework. Furthermore, classification of the unstained transmittance data sets using a k-nn classifier is also investigated.

### Summary

The invention is set out in the appended set of claims. The methods described herein may be used to obtain unstained images of a tissue sample in which a region of interest is identified that is, e.g., typically difficult to identify without applying a stain or other contrast agent. This may be achieved by identifying the region of interest in an image of the same tissue sample that is stained, for example an IHC stain or an H+E stain, that allows the region of interest to be identified more easily, either by manual input by a trained operator using the image or by using image processing techniques. The unstained images with the region of interest identified can be used to train a neural network to identify a corresponding region of interest in an additional unstained image. Such a trained neural network may be able to identify a region of interest with a certain property, for example a region of interest including cancerous cells, using unstained images. In this way, unstained images may be used to identify regions of interest using features of unstained images that are not generally used for identification by human operators or by machine learning algorithms. In some aspects, such unstained images could be used in combination with stained images by a pattern recognizer to provide estimated regions of interest that have an improved quality relative to such regions of interest determined without the benefit of unstained image data.

It will be appreciated that aspects can be implemented in any convenient form. For example, aspects may be implemented by appropriate computer programs which may be carried on appropriate carrier media which may be tangible carrier media (e.g. disks) or intangible carrier media (e.g. communications signals). Aspects may also be implemented using suitable apparatus which may take the form of programmable computers running computer programs arranged to implement the invention. Aspects can be combined such that features described in the context of one aspect may be implemented in another aspect.

### Brief Description of the Drawings

Figure 1 is an illustration of a laboratory environment including pathology workstation in which the method is practiced.
Figure 2 is a flowchart showing the methodology for training a pattern recognizer.
Figure 3A is an illustration of a portion of a tissue sample image in which a mask is drawn or created algorithmically over a region of interest, such as tumor cells. It will be understood that for some tissue specimens there may be more than one mask created for a given slide image.
   magnified images of unstained tissue specimens. The training examples are in the form of digital magnified pathology images annotated by the pathology workstation and methods of this disclosure.

The methods described herein may be used to obtain unstained images of a tissue sample in which a region of interest is identified that is, e.g., typically difficult to identify without applying a stain or other contrast agent. This may be achieved by identifying the region of interest in an image of the same tissue sample that is stained, for example an IHC stain or an H+E stain, that allows the region of interest to be identified more easily, either by manual input by a trained operator using the image or by using image processing techniques. The unstained images with the region of interest identified can be used to train a neural network to identify a corresponding region of interest in an additional unstained image. Such a trained neural network may be able to identify a region of interest with a certain property, for example a region of interest including cancerous cells, using unstained images. In this way, unstained images may be used to identify regions of interest using features of unstained images that are not generally used for identification by human operators or by machine learning algorithms. In some aspects, such unstained images could be used in combination with stained images by a pattern recognizer to provide estimated regions of interest that have an improved quality relative to such regions of interest determined without the benefit of unstained image data.

It will be appreciated that aspects can be implemented in any convenient form. For example, aspects may be implemented by appropriate computer programs which may be carried on appropriate carrier media which may be tangible carrier media (e.g. disks) or intangible carrier media (e.g. communications signals). Aspects may also be implemented using suitable apparatus which may take the form of programmable computers running computer programs arranged to implement the invention. Aspects can be combined such that features described in the context of one aspect may be implemented in another aspect.

### Brief Description of the Drawings

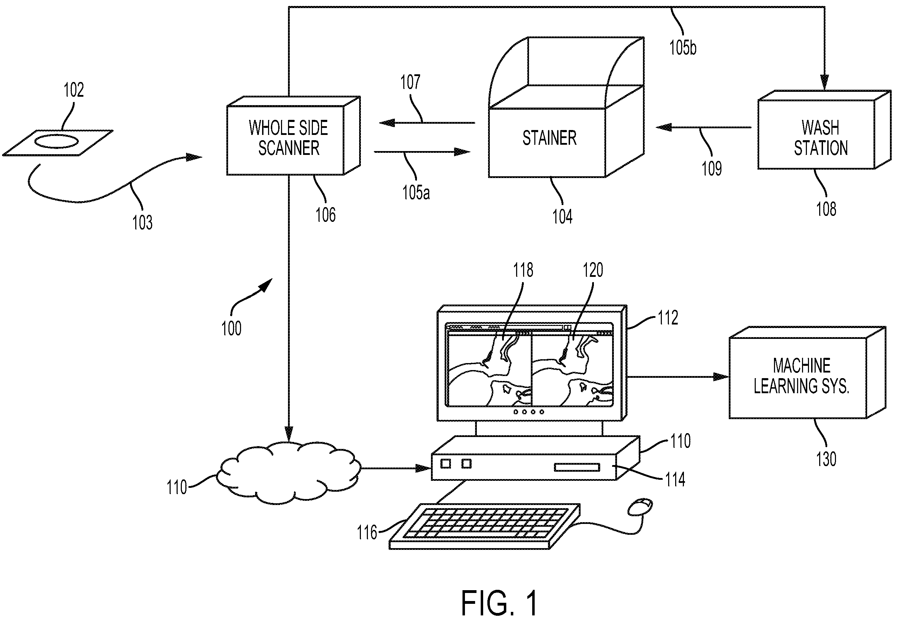

Figure 1 is an illustration of a laboratory environment including pathology workstation in which the method is practiced.

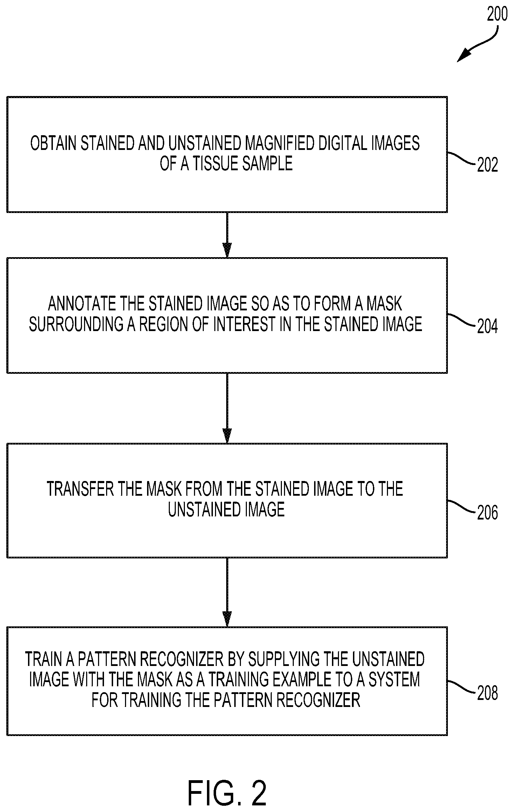

Figure 2 is a flowchart showing the methodology for training a pattern recognizer in accordance with one embodiment.

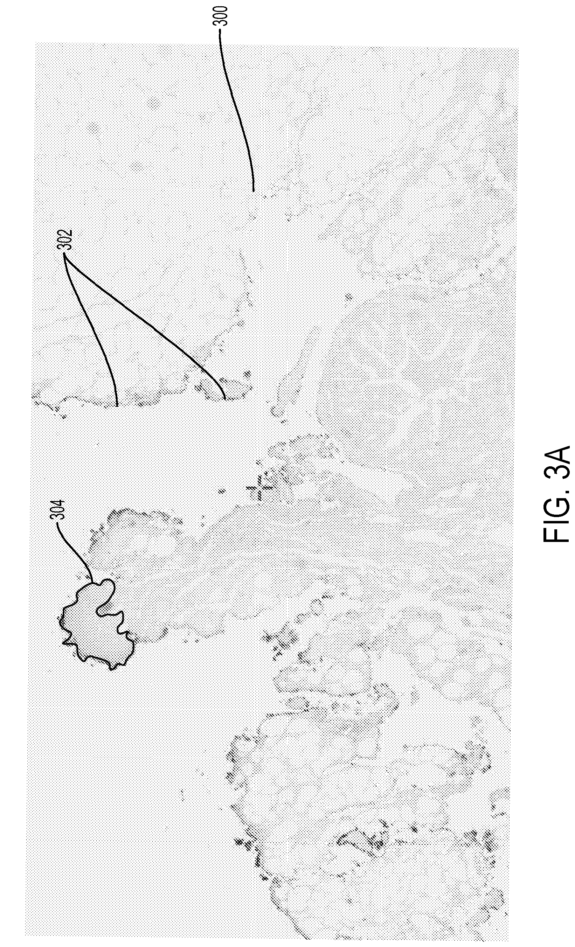

Figure 3A is an illustration of a portion of a tissue sample image in which a mask is drawn or created algorithmically over a region of interest, such as tumor cells. It will be understood that for some tissue specimens there may be more than one mask created for a given slide image.

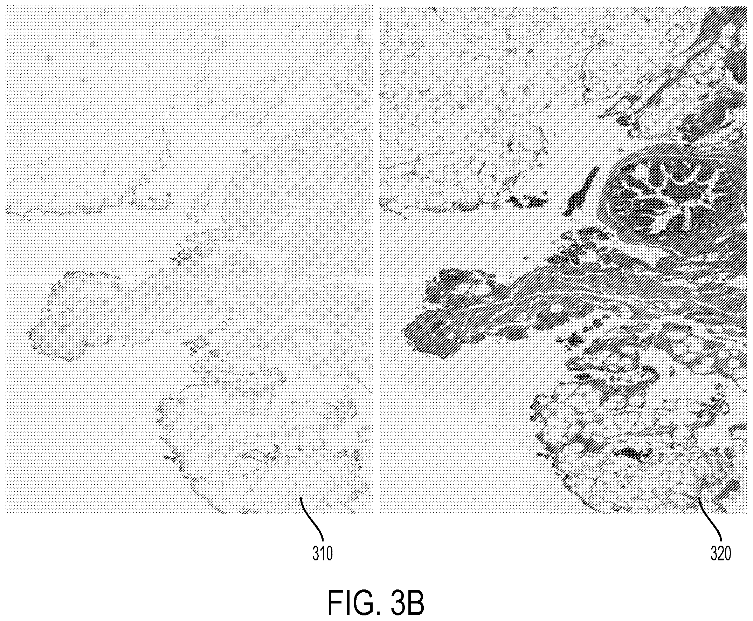

Figure 3B is an illustration of registered unstained and stained magnified images of the same tissue sample shown side by side.

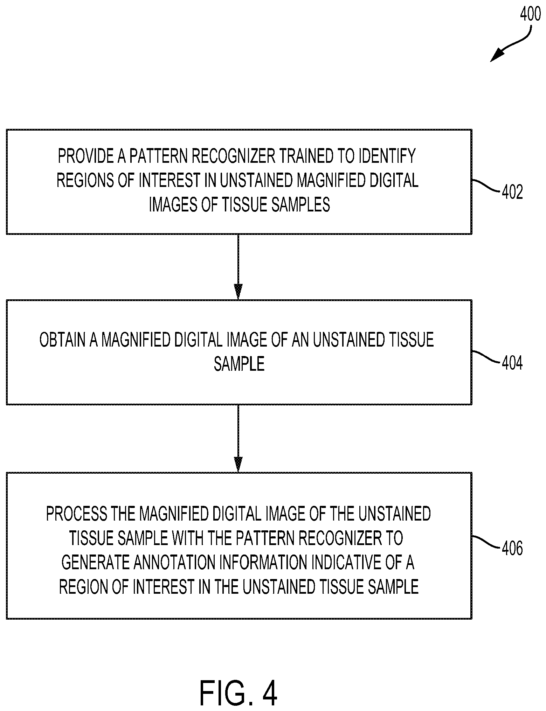

Figure 4 is a flowchart showing the methodology for using a trained pattern recognizer in accordance with one embodiment.

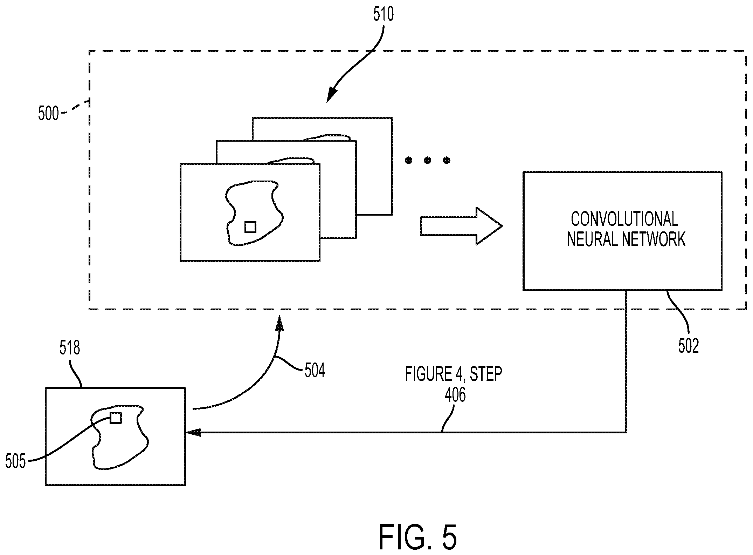

Figure 5 is a more detailed illustration of the machine learning system of Figure 1.

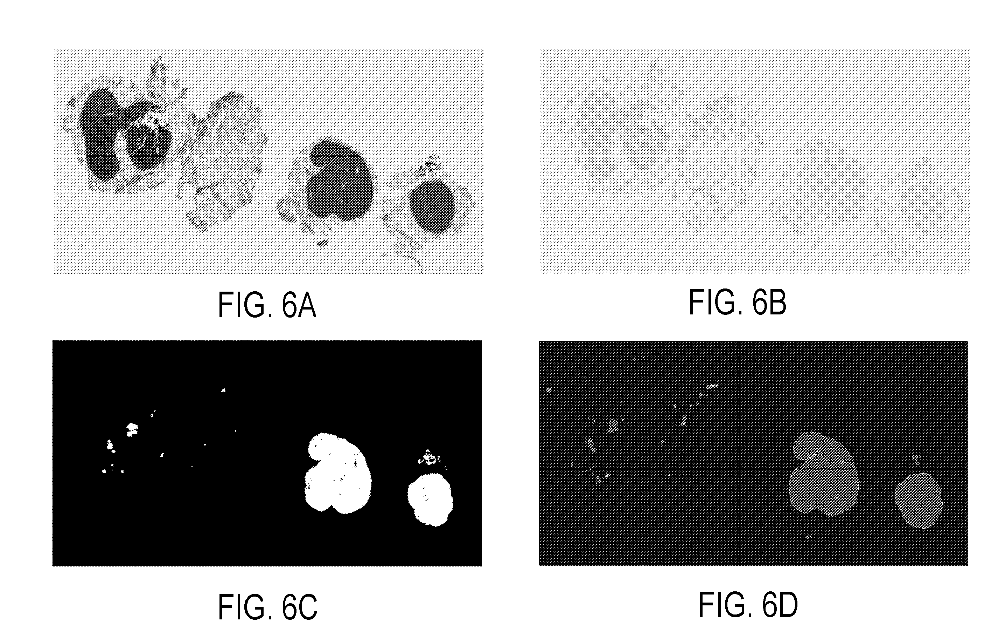

Figure 6A is a magnified image of a stained tissue sample.
Figure 6B is a magnified image of the tissue sample of Figure 6A in an unstained state.
Figure 6C is an image of a ground-truth mask representing the location of cancer cells in the tissue sample of Figure 6A and 6B.
Figure 6D is an image of a heat map representing the likelihood that a region within the magnified image of the unstained tissue sample of Figure 6B contains cancer cells.

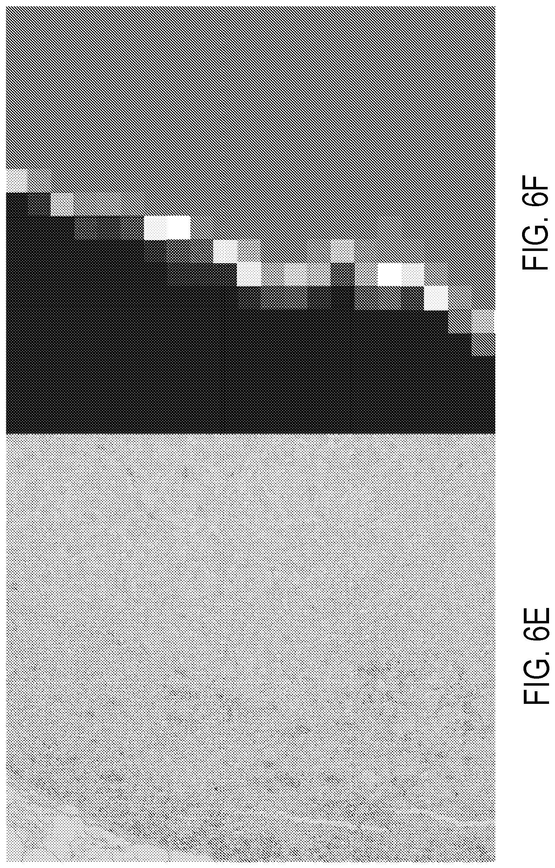

Figure 6E is a magnified image of an unstained tissue sample.
Figure 6F is an image of a heat map representing the likelihood that a region within the magnified image of the unstained tissue sample of Figure 6E contains cancer cells.

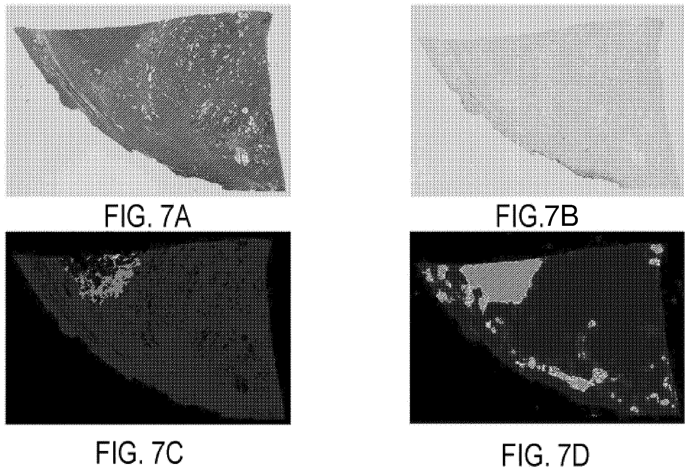

Figure 7A is a magnified image of a stained tissue sample.
Figure 7B is a magnified image of the tissue sample of Figure 7A in an unstained state.
Figure 7C is an image of a ground-truth mask representing the location of cancer cells in the tissue sample of Figure 7A and 7B.
Figure 7D is an image of a heat map representing the likelihood that a region within the magnified image of the unstained tissue sample of Figure 7B contains cancer cells.

### Detailed Description

Attention will now be directed to Figure 1 which is an illustration of a laboratory 100 environment in which a method as described herein may be practiced. A tissue sample (e.g., a sample that has been formalin fixed and paraffin embedded), is placed onto a microscope slide 102 and the tissue sample is placed into supplied as indicated at 103 to a whole slide scanner 106. Such scanners are also widely known and available from a variety of vendors. The whole slide scanner 106 scans the slide at a user specified magnification, such as 10X, 20X or 40X. The whole slide scanner includes a digital camera for capturing magnified, color digital images of the specimen. The digital magnified image of the unstained slide (an "unstained image") is then stored, either locally in the whole slide scanner 106, in a cloud network or other remote server, on a local hard disk 114 of a pathology workstation 110, or in some other storage medium.

The slide, after having been scanned by the whole slide scanner 106, is then sent as indicated at 105a to a stainer 104 that is configured to apply one or more stains to the tissue sample. Commercial stainers for applying H&E, IHC and other special stains to tissue samples are known and available from a variety of vendors. For example, the stainer 104 may initially stain the slide with H&E staining agents, and a cover slip may be placed over the tissue sample. Following such staining, the slide is then provided as indicated at 107 to the whole slide scanner 106. The slide is scanned and imaged in the scanner 106 at the same magnification as the first unstained image and the second digital magnified image of the stained slide (a "stained image") is stored in a memory. Additionally or alternatively, different sections from a serial sectioning of a tissue sample could be used to generate stained and unstained images for the tissue sample. For example, the tissue sample could be sliced into thin (e.g., several microns thick) sections, and a first section could be imaged without staining to generate an unstained image of the tissue sample while a second section, neighboring or otherwise proximate to the first section, could be stained and imaged to generated a stained image of the tissue sample.

The slide may optionally be washed and/or stained with additional staining agents to provide additional stained images, corresponding to the additional staining agents, of the tissue sample. For example, following imaging of the stained sample slide by the whole slide scanner 106, the stained tissue slide may be provided, as indicated at 105b, to a wash station 108 containing washing apparatus and associated chemicals and trained personnel to wash out (i.e., remove) the staining agents (e.g., H+E staining agents) previously applied by the stainer 104 such that the slide can be re-stained with a second, different stain. Such a different stain may include a special stain such as an IHC stain or a multiplex stain. The wash station 108 includes apparatus and chemicals so that the user can perform any well-known procedure for washing H&E staining agents from a tissue specimen. In one example, the following procedure is employed:
1. Soak the slide in xylene to remove the coverslip.
2. Once the coverslip is removed, rinse the slide several times with xylene. Then perform 2 to 3 rinses of the slide with EtOH, then several rinses with water. Most of the eosin will typically rinse out in water. Now place the slide in acid alcohol for a minute or two. Rinse the slide again in water.
After the procedure for washing the already-applied staining agents from the tissue specimen is performed, the slide is then sent back to the stainer 104 as indicated at 109 and the slide is stained with a second, different or special stain, e.g., an IHC stain, then sent as indicated at 107 to the whole slide scanner 106. The slide is scanned and imaged in the scanner 106 at the same magnification as the first unstained image and the second stained image and an additional digital magnified image of the stained slide (an "additional stained image") is stored in a memory.

Note that such an additional staining agent (e.g., an IHC staining agent) could be applied to an already-stained tissue sample (e.g., an H+E stained tissue sample) without washing out the staining agent already present in the tissue sample. In such an example, the already-stained tissue sample would be provided, following imaging of the sample by the whole slide scanner 106, to the stainer 104 as indicated at 105a.

The two (or more) digital magnified images of the tissue sample may then be registered to each other. The registration may be performed in any convenient way, for example using well known image processing techniques to determine the X/Y coordinates for various key features in the images, such as areas of high contrast, corners, boundaries, etc. so that the X/Y pixel location of each of the key features of one of the images can be correlated or matched to the X/Y pixel locations of the same key features in the other image. In one embodiment useful for understanding the invention, we use SIFT (a feature extraction method) to determine areas with sharpness or color distribution gradients to identify key features or locations in the image (for example 10 key features) and determine matching feature vectors. The registration step is performed for two reasons: 1) so that the stained and unstained images, 118 and 120 respectively (Figure 1), and/or any additional stained images, can be displayed side by side or on top of each other on the display 112 of the workstation in a coordinated manner, and 2) when the user annotates the stained (e.g., H+E, IHC) image 118 to draw a mask, the X/Y locations of each vertex in the mask (polygon) or other location(s) of the mask can be transferred to the unstained image (e.g., to permit the unstained image and mask to be provided as a training example to train a pattern recognizer). The workstation includes user interface tools including the keyboard 116, mouse and display 112 to facilitate annotation of stained images to draw the mask and optionally to assign a label to the specimen, e.g., "cancerous."

After the annotation process to generate the mask and assign the label to the specimen has been performed, in one embodiment useful for understanding the invention, the annotated unstained image of the tissue specimen with the mask is supplied to a machine learning system 130 as a training example for training a machine learning model (e.g., an artificial neural network or other type of pattern recognizer) in the system 130. This aspect will be described in greater detail in conjunction with Figure 5 later in this document.

Figure 2 is a flowchart showing the methodology for generating a mask for an unstained tissue specimen image using the system of Figure 1 as described above. In step 202 stained and unstained images of a slide containing the tissue specimen are obtained. This can include scanning the slide both before and after staining at the same magnification M (e.g., 10X, 20, and/or 40X) in the whole slide scanner 106. Alternatively, a different magnification can be used and the resulting magnified digital image may be downsampled or upsampled to obtain digital image data at other magnifications (e.g., at a magnification corresponding to the magnification of another of the obtained digital images). Step 202 may include obtaining additional magnified digital images of the slide, e.g., after the slide has been stained with additional staining agents (e.g., using the stainer 104 of Figure 1) and/or after one or more staining agents have been washed out of the slide (e.g., using the wash station 108 of Figure 1).

At step 204, the creation of the mask, e.g., using user interface tools and the side by side display of the digital images is performed. The user annotates one or more of the stained digital images on the workstation 112 as indicated in Figure 1. The user annotation is used to generate a mask in the digital images that is indicative of a region of interest (e.g., a region containing cancer cells) within the stained image(s). The mask may indicate the region of interest in a variety of ways. For example, the mask may specify vertices or other information about one or more closed polygonal (or other specified geometric) regions within the stained digital image. In another example, the mask may specify a set of pixels or other pre-specified regions within the stained digital image that correspond to the region of interest.

Additionally or alternatively, step 204 may include algorithmically generating the mask and/or annotation information based on the stained image(s). Image analysis or classification methods are performed in software on the stained image(s) to identify cancer cells, cysts, abnormal portions of microvasculature, bacterial biofilms, scar tissue, plaques or other non-cellular structures, or other region(s) of interest in the image, and then construct a closed polygon or otherwise-defined mask around such cells or other structures or substances of interest. The construction of such closed polygons or other masks may be limited to detection of cancer cells or other tissue or structures of interest in regions that have a minimum size so as to create more useful masks and avoid creation of masks of, e.g., isolated cells or small groups of cells. The algorithmic creation of such a mask in a stained image could be performed using one of several possible techniques:
a) thresholding the stained image on certain stain colors and drawing a polygon around regions having pixels with the stain color above the threshold; or
b) using a neural network or other pattern recognition classifier trained to recognize cancer cells or other substances or structures of interest in stained tissue sample images to find such substances or structures in the stained image. Neural network and other classification methods for automatic detection of regions of interest and/or cancer cells in digital images, e.g., based on cellular morphology and pixel intensity variations in stained digital images, is known in the art and therefore a detailed description is omitted for the sake of brevity. See e.g., the discussion of PCT/US2017/019051 filed February 23, 2017 and scientific and patent literature cited previously.

At step 206 the mask is transferred from the stained image(s) to the unstained image. This can include aligning or otherwise registering the unstained image to the stained image(s), as explained above. Transferring the mask to the unstained image could include distorting, warping, or otherwise modifying the mask according to the alignment or registration between the unstained image and the stained image(s). In another example, the unstained image could be distorted, warped, or otherwise modified according to the alignment or registration, and the mask could be transferred to the modified version of the unstained image. In yet another example, the stained image could be distorted, warped, or otherwise modified according to the alignment or registration, and the annotation of step 204 could be performed for the modified version of the stained image. Transferring the mask may be facilitated by such alignments and/or registrations, because the known X/Y locations of vertices, splines, pixels, or other elements of the mask within the stained image may be translated directly to the unstained image.

At step 208 the unstained image and mask transferred thereto are supplied, as a training example, to a system for training a pattern recognizer (e.g., machine learning system 130 of Figure 1) in order to train the pattern recognizer. This aspect will be described in greater detail in conjunction with Figure 5 later in this document. In some examples, the stained image(s) may also be provided as part of the training example, in order to train the pattern recognizer to generate masks based on the combination of the unstained image and the stained image(s). Such a pattern recognizer, being trained to generate masks based on the combination of multiple images (including an unstained image), may generate higher-quality masks than a pattern recognizer that does not take into account the unstained image.

Figure 3A is an illustration of a magnified image of a stained tissue sample, with regions of darker contrast indicating cancerous cells in the tissue sample. Figure 3A includes an illustrative example of a mask 304 that is created in the image of stained tissue specimen 300 having various tissue features 302. The mask 304 shown in Figure 3A is a closed polygonal region having any arbitrary boundary consisting of vertices and connecting lines. Additionally or alternatively, a mask may be defined in some other manner, for example, as a description of a set of pixels or other defined regions, of a superset of such pixels or other defined regions, that correspond to a region of interest. In yet another example, the mask could be defined by a set of splines or other curvilinear elements defining one or more closed regions.

Typically the mask is highly irregular in shape and is constructed manually by a user (typically a trained pathologist) operating a workstation (e.g., as depicted in Figure 1) and using simple controls on the user interface of the workstation (e.g., a stylus, a mouse, a keyboard, a touch-sensitive display) to draw a perimeter of the mask. The user may wish to zoom in to see areas of the stained image (e.g., high-contrast regions) in greater detail. The X/Y locations of the vertices of such a mask boundary in the stained image, or other information specifying the mask (e.g., pixels identities or locations, spline locations or curvatures) are stored in memory so that the mask can be transferred to an unstained image, used to train a pattern recognizer, or used for some other purpose.

Figure 3B is an illustration of registered unstained 310 and H+E stained 320 magnified images of the same prostate tissue sample shown side by side. As illustrated in Figure 3B, an unstained image includes a great deal of image information that is de-emphasized or diminished when the tissue sample is stained. For example, image information about cell morphology at the edge of the tissue has a greater contrast, relative to mid-tissue image information, in the unstained image 310. However, in the stained image 320, image information about cell morphology of mid-tissue cells has approximately the same image contrast as image information about cells at the edges of the tissue sample.

Figure 4 is a flowchart showing the methodology for using such a trained pattern recognizer to generate a mask for an unstained tissue specimen image in accordance with one embodiment (e.g., using the system of Figure 1 as described above). In step 402, a trained pattern recognizer is provided. The pattern recognizer is trained to identify regions of interest (e.g., regions containing cancer cells) in unstained magnified digital images of tissue samples. The pattern recognizer could include an artificial neural network, a convolutional neural network, or some other pattern recognizing algorithms or structures. The trained pattern recognizer could be provided on a non-transitory data storage medium (e.g., a hard drive, a compact disc), via a communications channel (e.g., via the internet), as part of a pathology workstation (e.g., on a hard drive or other data storage of the pathology workstation), or by some other method. Additionally or alternatively, the pattern recognizer could be provided as described above, by using one or more sets of unstained tissue sample images and corresponding masks to train the pattern recognizer.

In step 404 an unstained image of a slide containing a tissue specimen is obtained. This can include scanning the slide in an unstained state at a specified magnification M (e.g., 10X, 20, and/or 40X) in, e.g., the whole slide scanner 106 of Figure 1.

In step 406, the trained pattern recognizer is applied to process the digital image of the unstained tissue sample (the "unstained image") to generate annotation information (e.g., vertices of a closed polygonal region, locations and curvatures of splines of a closed region, the identities and/or location of pixels) indicative of a region of interest within the unstained image. Such a region of interest could include cancer cells within the tissue sample. For example, the tissue sample could be a sample of lymph tissue, breast tissue, or prostate tissue and the region of interest could describe the location and/or extent of cancer cells and/or a tumor within such tissues.

In some examples, the trained pattern recognizer could be configured to receive, as input, both the unstained image of the tissue sample and one or more additional, stained images of the tissue sample (obtained, e.g., as described above using a stainer, wash station, etc.). Such a trained pattern recognizer could be trained using sets of corresponding unstained images, stained images, and masks. The masks generated by such a pattern recognizer could be improved relative to a pattern recognizer that is trained to generate masks based only on stained image(s) due to taking advantage of information that is present in the unstained tissue sample images (e.g., features, patterns, regions of contrast) that may be occluded, de-emphasized, abolished, overshadowed, washed out, or otherwise diminished by the presence of a staining agent in the tissue sample.

A pattern recognizer 500 as described above (e.g., a pattern recognizer of the machine learning system 130 shown in Figure 1) is shown by way of example in Figure 5. The pattern recognizer 500 includes a multitude of training instances 510 in the form of magnified digital images of unstained tissue specimens each with a mask or boundary (shown as a small rectangle in Figure 5) which delineates a region of interest (e.g., a region containing cancer cells). The training instances 510 are used to train a classification engine, such as a convolutional neural network (CNN) pattern recognizer 502, an artificial neural network pattern recognizer, and/or some other type of pattern recognizer, to recognize the presence of some contents of interest (e.g., cancer cells) in tissue samples of the type depicted in the training instances 510 (e.g., prostate, breast, lymph, brain, or other tissue type). Once a suitable number of training instances 510 have been obtained and the performance of the CNN pattern recognizer 502 reaches a point of high accuracy (e.g., by validating the CNN output against a suitable separate test set of images and corresponding masks) then the CNN pattern recognizer 502 can be used to perform step 406 of Figure 4 on unstained image 518 and generate the mask 505. The training set 510 can be obtained from a library of tissue sections that can be subject to imaging, staining, and annotation steps of this disclosure.

Figures 6A-F illustrate the application of the methods herein to identifying tumor cells (metastasized from a breast cancer) within lymph node tissue. Figure 6A is an illustration of a magnified image of a stained lymph node tissue sample, with regions of darker contrast indicating cancerous cells in the tissue sample. Figure 6B is an illustration of a magnified image of the lymph node tissue sample illustrated in Figure 6A, prior to being stained (i.e., an unstained tissue sample). Figure 6C illustrates a ground-truth mask representing portions of the tissue sample of Figures 6A and 6B that include cancer cells (white in the figure indicates the location and extent of the tumor). Such ground-truth masks, in combination with corresponding unstained images of lymph node tissue, can be used to train a pattern recognizer (e.g., an artificial neural network) to identify regions of interest within lymph node tissue samples, using the methods described herein. For example, such a pattern recognizer could generate a region-of-interest heat map, as illustrated in Figure 6D, based on the unstained tissue sample image of Figure 6B. Lighter regions of the heat map indicate regions of interest. Such a heat map could be used to generate a mask of regions of interest within the unstained tissue sample image (e.g., by thresholding the values of the heat map. Figure 6E illustrates another unstained magnified image of a tissue sample, and Figure 6F illustrates a corresponding region-of-interest heat map that could be generated according to the methods described herein and/or used to generate a region-of-interest mask (e.g., by thresholding the values of the heat map of Figure 6F).

Figures 7A-D illustrate the application of the methods herein to identifying prostate adenosarcoma cells within prostate tissue. Figure 7A is an illustration of a magnified image of a stained prostate tissue sample, with regions of darker contrast indicating cancerous cells in the tissue sample. Figure 7B is an illustration of a magnified image of the prostate tissue sample illustrated in Figure 7A, prior to being stained (i.e., an unstained tissue sample). Figure 7C illustrates a ground-truth mask representing portions of the tissue sample of Figures 7A and 7B that include cancer cells (white in the figure indicates the location and extent of the tumor). Such ground-truth masks, in combination with corresponding unstained images of prostate tissue, can be used to train a pattern recognizer (e.g., an artificial neural network) to identify regions of interest within prostate tissue samples, using the methods described herein. For example, such a pattern recognizer could generate a region-of-interest heat map, as illustrated in Figure 7D, based on the unstained tissue sample image of Figure 7B. Lighter regions of the heat map indicate regions of interest. Such a heat map could be used to generate a mask of regions of interest within the unstained tissue sample image (e.g., by thresholding the values of the heat map.

## Claims

1. A method comprising:
providing a pattern recognizer comprising an artificial neural network and trained to identify regions of interest in unstained magnified digital images of tissue samples;
receiving a digital image of an unstained version of a tissue sample;
applying the trained pattern recognizer to the digital image;
receiving, from the trained pattern recognizer, annotation information indicative of one or more regions of interest within the digital image,
wherein the annotation information comprises a region-of-interest mask that indicates a region of unstained tissue containing cancer cells,
wherein the region-of-interest mask is obtained by thresholding a region-of-interest heat map generated by the trained pattern recognizer, and
wherein the region-of-interest heat map represents the likelihood that a region within the unstained digital image contains cancer cells.

2. The method of claim 1, further comprising receiving a second digital image of a stained version of the tissue sample, and
wherein applying the trained pattern recognizer to the digital image comprises providing the second digital image to the trained pattern recognizer.

3. The method of claim 2, wherein a staining agent for the stained version of the tissue sample comprises an immunohistochemical (IHC) stain or an haematoxylin and eosin (H&E) stain.

4. The method of any preceding claim, wherein the trained pattern recognizer was trained by:
obtaining (202) magnified digital images of the tissue sample, one of which represents the tissue sample after having been stained with a staining agent ("stained image") and one of which represents the tissue sample in an unstained state ("unstained image");
annotating (204) the stained image so as to form a mask surrounding a region of interest in the stained image;
transferring (206) the mask from the stained image to the unstained image; and training (208) the pattern recognizer by supplying the unstained image and the mask as a training example (510) to a system for training the pattern recognizer, the mask indicating the region of interest within the unstained image.

5. The method of any preceding claim, wherein the tissue sample is a sample of lymph tissue, breast tissue, or prostate tissue.

6. The method of any preceding claim, wherein the annotation information includes one or more of vertices of a closed polygonal region, locations and curvatures of splines of a closed region, the identities and/or location of pixels.

7. The method of any preceding claim, wherein the artificial neural network is a convolutional neural network (502).

8. A system comprising:
a memory storing processor readable instructions; and
one or more processors arranged to read and execute instructions stored in said memory;
wherein said processor readable instructions comprise instructions arranged to control the system to carry out a method according to any preceding claim.

9. A non-transitory computer-readable medium storing processor-executable instructions to cause one or more processors to carry out a method according to any of claims 1-7.

## Patentansprüche

1. Verfahren, umfassend:
Bereitstellen einer Mustererkennungseinheit, die ein künstliches neuronales Netzwerk umfasst und dazu trainiert ist, Regionen von Interesse in ungefärbten vergrößerten Digitalbildern von Gewebeproben zu identifizieren;
Empfangen eines Digitalbilds einer ungefärbten Version einer Gewebeprobe;
Anwenden der trainierten Mustererkennungseinheit auf das Digitalbild;
Empfangen, von der trainierten Mustererkennungseinheit, von Beschriftungsinformationen, die eine oder mehrere Regionen von Interesse in dem Digitalbild anzeigen,
wobei die Beschriftungsinformationen eine Region-von-Interesse-Maske umfassen, die eine Region von ungefärbtem Gewebe, die Krebszellen enthält, anzeigt,
wobei die Region-von-Interesse-Maske durch Schwellenwertbildung einer durch die trainierte Mustererkennungseinheit erzeugte Region-von-Interesse-Wärmekarte erhalten wird und
wobei die Region-von-Interesse-Wärmekarte die Wahrscheinlichkeit dafür darstellt, dass eine Region in dem ungefärbten Digitalbild Krebszellen enthält.

2. Verfahren nach Anspruch 1, ferner umfassend das Empfangen eines zweiten Digitalbilds von einer gefärbten Version der Gewebeprobe und
wobei das Anwenden der trainierten Mustererkennungseinheit auf das Digitalbild das Bereitstellen des zweiten Digitalbilds für die trainierte Mustererkennungseinheit umfasst.

3. Verfahren nach Anspruch 2, wobei ein Färbemittel für die gefärbte Version der Gewebeprobe einen immunhistochemischen (IHC-) Farbstoff oder einen Hämatoxylin- und Eosin-(H&E-) Farbstoff umfasst.

4. Verfahren nach einem der vorangegangenen Ansprüche, wobei die trainierte Mustererkennungseinheit durch Folgendes trainiert wurde:
Erhalten (202) von vergrößerten Digitalbildern der Gewebeprobe, von denen eines die Gewebeprobe nachdem sie mit einem Färbemittel gefärbt wurde darstellt ("gefärbtes Bild") und eines die Gewebeprobe in einem ungefärbten Zustand darstellt ("ungefärbtes Bild");
Beschriften (204) des gefärbten Bilds, um eine Maske auszubilden, welche eine Region von Interesse in dem gefärbten Bild umgibt;
Übertragen (206) der Maske von dem gefärbten Bild auf das ungefärbte Bild; und
Trainieren (208) der Mustererkennungseinheit durch Zuführen des ungefärbten Bilds und der Maske als Trainingsbeispiel (510) für ein System zum Trainieren der Mustererkennungseinheit, wobei die Maske die Region von Interesse in dem ungefärbten Bild anzeigt.

5. Verfahren nach einem der vorangegangenen Ansprüche, wobei die Gewebeprobe eine Probe von Lymphgewebe, Brustgewebe oder Prostatagewebe ist.

6. Verfahren nach einem der vorangegangenen Ansprüche, wobei die Beschriftungsinformationen eines oder mehrere von Scheitelpunkten einer geschlossenen polygonalen Region, Positionen und Krümmungen von Splines einer geschlossenen Region, die Identitäten und/oder Positionen von Pixeln umfassen.

7. Verfahren nach einem der vorangegangenen Ansprüche, wobei das künstliche neuronale Netzwerk ein neuronales Faltungsnetzwerk (502) ist.

8. System, umfassend:
einen Speicher, der durch einen Prozessor lesbare Befehle speichert; und
einen oder mehrere Prozessoren, die angeordnet sind, um in dem Speicher gespeicherte Befehle zu lesen und auszuführen;
wobei die durch den Prozessor lesbaren Befehle Befehle umfassen, die angeordnet sind, um das System zu steuern, um ein Verfahren nach einem der vorangegangenen Ansprüche auszuführen.

9. Nichtflüchtiges computerlesbares Medium, das durch einen Prozessor ausführbare Befehle speichert, die bewirken, dass ein oder mehrere Prozessoren ein Verfahren nach einem der Ansprüche 1 bis 7 ausführen.

## Revendications

1. Procédé, comprenant les étapes consistant à :
fournir un dispositif de reconnaissance de motif comprenant un réseau neuronal artificiel et entraîné pour identifier des régions d'intérêt dans des images numériques agrandies non colorées d'échantillons de tissu ;
recevoir une image numérique d'une version non colorée d'un échantillon de tissu ;
appliquer le dispositif de reconnaissance de motif entraîné à l'image numérique ;
recevoir, à partir du dispositif de reconnaissance de motif entraîné, des informations d'annotation indicatives d'une ou plusieurs régions d'intérêt au sein de l'image numérique,
dans lequel les informations d'annotation comprennent un masque de région d'intérêt qui indique une région de tissu non coloré contenant des cellules cancéreuses,
dans lequel le masque de région d'intérêt est obtenu par seuillage d'une carte thermique de région d'intérêt générée par le dispositif de reconnaissance de motif entraîné, et
dans lequel la carte thermique de région d'intérêt représente la probabilité qu'une région dans l'image numérique non colorée contienne des cellules cancéreuses.

2. Procédé selon la revendication 1, comprenant en outre la réception d'une seconde image numérique d'une version colorée de l'échantillon de tissu, et
dans lequel l'application du dispositif de reconnaissance de motif entraîné à l'image numérique comprend la fourniture de la seconde image numérique au dispositif de reconnaissance de motif entraîné.

3. Procédé selon la revendication 2, dans lequel un agent de coloration pour la version colorée de l'échantillon de tissu comprend une coloration immunohistochimique (IHC) ou une coloration à l'hématoxyline et à l'éosine (H&E).

4. Procédé selon l'une quelconque des revendications précédentes, dans lequel le dispositif de reconnaissance de motif entraîné a été entraîné par l'intermédiaire des étapes consistant à :
obtenir (202) des images numériques agrandies de l'échantillon de tissu, dont une certaine représente l'échantillon de tissu après avoir été colorée avec un agent de coloration (« image colorée ») et dont une certaine représente l'échantillon de tissu dans un état non coloré (« image non colorée ») ;
annoter (204) l'image colorée de manière à former un masque entourant une région d'intérêt dans l'image colorée ;
transférer (206) le masque de l'image colorée à l'image non colorée ; et entraîner (208) le dispositif de reconnaissance de motif en fournissant l'image non colorée et le masque en tant qu'exemple d'entraînement (510) à un système pour entraîner le dispositif de reconnaissance de motif, le masque indiquant la région d'intérêt dans l'image non colorée.

5. Procédé selon l'une quelconque des revendications précédentes, dans lequel l'échantillon de tissu est un échantillon de tissu lymphatique, de tissu mammaire ou de tissu prostatique.

6. Procédé selon l'une quelconque des revendications précédentes, dans lequel les informations d'annotation incluent un ou plusieurs parmi les sommets d'une région polygonale fermée, les emplacements et les courbures de splines d'une région fermée, les identités et/ou l'emplacement des pixels.

7. Procédé selon l'une quelconque des revendications précédentes, dans lequel le réseau neuronal artificiel est un réseau neuronal convolutionnel (502).

8. Système, comprenant :
une mémoire stockant des instructions lisibles par un processeur ; et
un ou plusieurs processeurs agencés pour lire et exécuter des instructions stockées dans ladite mémoire ;
dans lequel lesdites instructions lisibles par le processeur comprennent des instructions agencées pour commander le système pour exécuter un procédé selon l'une quelconque des revendications précédentes.

9. Support non transitoire lisible par ordinateur stockant des instructions exécutables par un processeur pour amener un ou plusieurs processeurs à exécuter un procédé selon l'une quelconque des revendications 1 à 7.
